# EUROPEAN PATENT SPECIFICATION

(11) **EP 2 578 552 B1**
(45) Date of publication and mention of the grant of the patent: **09.12.2020**
(21) Application number: 10852557.7
(22) Date of filing: 01.06.2010
(51) Int. Cl.: C04B 26/04, B44C 5/06, B44F 9/04, B28B 3/00, C04B 14/02, B29C 67/24, C04B 26/06, C04B 26/14, C04B 26/18, C04B 111/00, C04B 111/54

(54) **PREPARATION METHOD OF ARTIFICIAL MARBLE**
HERSTELLUNGSVERFAHREN VOM KÜNSTLICHEM MARMOR
PROCÉDÉ DE PRÉPARATION POUR MARBRE ARTIFICIEL

(43) Date of publication of application: 10.04.2013
(73) Proprietor: LG Hausys, Ltd., Seoul 150-721 (KR)
(72) Inventor: SHIN, Sang Ho, Cheongwon-gun Chungcheongbuk-do 363-883 (KR); MOON, Je Su, Incheon 406-777 (KR); KIM, Bouk Su, Cheongju-si Chungcheongbuk-do 360-100 (KR); KIM, Hang Young, Cheongju-si Chungcheongbuk-do 361-302 (KR)
(74) Representative: Gill Jennings & Every LLP
(86) International application number: PCT/KR2010/003538
(87) International publication number: WO 2011/152578

(56) References cited:
- WO-A1-2008/084948
- WO-A1-2009/102091
- JP-A- H0 639 852
- KR-A- 20050 020 100
- KR-A- 20060 083 516
- KR-B1- 100 688 025
- KR-B1- 100 739 304
- KR-B1- 100 747 790
- KR-B1- 100 751 576
- KR-B1- 100 786 003

## Description

### [Technical Field]

The present invention relates to artificial marble and a method of manufacturing the same.

### [Background Art]

Artificial marble refers to an artificial composite exhibiting the texture of natural marble and manufactured by mixing a base of a synthetic resin, such as an acrylic resin, an unsaturated polyester resin and an epoxy resin, or cement with mineral and/or resin chips, and adding pigments to the mixture, as needed.

Examples of artificial marble include acrylic artificial marble, unsaturated polyester artificial marble, epoxy artificial marble, melamine artificial marble, and engineered stone (E-stone) artificial marble. Since such artificial marble has excellent aesthetics and processibility, is lighter than natural marble, and exhibits superior strength, the artificial marble is widely used for counter tables and interior building materials. Hitherto, artificial marble provides aesthetic effects through combinations of solid-color opaque chips. In this manner, however, artificial marble has limitations in exhibiting similar patterns to those of natural marble or granite. Accordingly, extensive studies have been conducted to develop artificial marble having an appearance close to that of natural marble.

However, although various methods for imparting excellent aesthetic appearances to artificial marble have been suggested, these conventional methods have limitations in exhibiting the texture of artificial marble close to that of natural marble. WO-A- 2009/102091 discloses a method for manufacturing artificial marble.

### [Disclosure]

### [Technical Problem]

The present invention is directed to solving problems as mentioned above and provides a method for manufacturing artificial marble.

### [Technical Solution]

The present invention provides a method of manufacturing artificial marble, which includes preparing uncured resin sheets or blocks using at least two different types of resin compositions providing different aesthetic effects, respectively; kneading the resin sheets or blocks and forming the kneaded product into an uncured marble resin sheet or resin block; and pressing the marble resin sheet or resin block.

### [Advantageous Effects]

According to embodiments of the present invention, the artificial marble is prepared by placing an uncured marble resin sheet or block in a mold and pressing, the artificial marble has excellent mechanical strength and gloss and does not contain bubbles therein even after pressing at low temperature and pressure.

### [Description of Drawings]

Fig. 1 is a flowchart of a method of manufacturing artificial marble according to an embodiment of the present invention; and
Figs. 2 and 3 are pictures of artificial marble prepared in examples of the present disclosure.

### [Mode for Invention]

The present disclosure describes artificial marble including a pressed product of an uncured marble resin sheet or resin block, which includes a first region containing a base resin and a coloring component; and a second region containing a base resin and a coloring component providing an appearance different from that of the coloring component of the first region.

Hereinafter, the artificial marble according to the present disclosure will be described in detail.

The artificial marble according to the present disclosure includes a pressed product of an uncured marble resin sheet or marble resin block which contains at least two types of resins prepared to provide different aesthetic effects after curing.

As used herein, the term "uncured resin sheet or block" means that components including resin syrup, fillers, a crosslinker and a pigment which constitute artificial marble are in a state of forming a preform in a bulk sheet or block. Here, each component (e.g., resin syrup or crosslinker) included in the preform does not form a chemical bond including cross-linking, and the concept "uncured" is distinguished from the concept "semi-cured" or "partly cured."

According to the present invention, the uncured resin sheet or block is formed into artificial marble by pressing, and thus the respective resin regions included in the sheet or block to provide different appearances exhibit equivalent or superior natural aesthetic effects to those of natural marble. Further, the resin sheet or block is directly subjected to pressing into artificial marble, thereby preventing formation of impurities including bubbles in the artificial marble upon molding, and finally imparting excellent gloss and strength to the artificial marble.

Also, the artificial marble may include two types of resin regions, that is, the first region and the second region, which are distinguished from each other as described above, or may include more than two regions of different resins as needed, thereby exhibiting colorful patterns.

There is no restriction as to the kind of base resin that may be used in the present invention, and any typical base resin in the art may be used without limitation. Examples of the base resin may include an acrylic resin, an unsaturated polyester resin, and an epoxy resin, which may be used alone or in combinations thereof.

Examples of the acrylic resin may include monomers including methyl (meth)acrylate, ethyl (meth)acrylate, butyl (meth)acrylate, 2-ethylhexyl (meth)acrylate, benzyl (meth)acrylate, and glycidyl (meth)acrylate, or mixtures thereof, , without being limited thereto.

There is no restriction as to the kind of unsaturated polyester that may be used in the present invention. For example, the unsaturated polyester resin may be a resin obtained prepared by condensation of α,β-unsaturated dibasic acid or a mixture of the dibasic acid and a saturated dibasic acid with polyvalent alcohol. Here, the resin may have an acid value of 5 to 50 and a molecular weight of 1,000 to 5,000, without being limited thereto. The polyester resin may be prepared by any method, without being limited thereto, for example, by mixing a dibasic acid with polyvalent alcohol in a certain ratio (for example., a mole ratio of alcoholic hydroxyl groups to carboxyl groups is 0.8 to 1.2), performing condensation of the mixture at 140 to 250°C under an inert gas atmosphere, such as carbon dioxide gas and/or nitrogen gas while removing produced water, and gently raising temperature according to the degree of reaction.

Here, examples of the α,β-unsaturated dibasic acid or saturated dibasic acid may include maleic anhydride, citraconic acid, fumaric acid, itaconic acid, phthalic acid, phthalic anhydride, isophthalic acid, terephthalic acid, succinic acid, adipic acid, sebacic acid, and/or tetrahydrophthalic acid. Examples of the polyvalent alcohol may include ethylene glycol, diethylene glycol, triethylene glycol, propylene glycol, dipropylene glycol, tripropylene glycol, polypropylene glycol, 1,3-butylene glycol, hydrogenated bisphenol A, trimethylolpropane monoaryl ether, neopentyl glycol, 2,2,4-trimethyl-1,3-pentanediol and/or glycerin. As needed, the polyester resin may further include monobasic acids, such as acrylic acid, propionic acid and/or benzoic acid; or polybasic acids, such as trimellitic acid and/or benzol tetracarbonic acid.

Further, there is no restriction as to the kind of epoxy resin that may be used in the present invention. For example, a bifunctional or multifunctional epoxy resin may be used. Here, an example of the bifunctional or multifunctional epoxy resin may be at least one selected from the group consisting of a bisphenol A epoxy resin, a bisphenol S epoxy resin, a tetraphenyl ethane epoxy resin, and a phenol novolac epoxy resin, without being limited thereto.

The artificial marble of the present disclosure includes a coloring component added together with the base resin and exhibiting different appearances in regions of the artificial marble. The coloring component is not limited to a particular kind but may include any one which is mixed with the resin and imparts natural aesthetic effects. Examples of the coloring component may include pigments, dyes, chips, or mixtures thereof.

The pigment or dye may include any organic or inorganic pigment or dye used in the art depending on a desired appearance without being limited to particular kinds. Also, the chips are not limited to a particular kind but may include any chip used in the art, for example, resin chips or natural ingredient chips. Here, the resin chips may be prepared by manufacturing a flat substrate using an acrylic resin, an unsaturated polyester resin, an epoxy resin, or a melamine resin and cutting the substrate into pieces having a suitable size. In this process, various pigments or dyes may be added to the resin, thereby producing color chips. Further, examples of the natural ingredient chips may include shell, stone, stone powder, quartz, charcoal powder, red clay, magnet powder, herbs, pearl, mirror powder, or mixtures thereof. However, the coloring component including the chips used in the present invention may be selected depending on desired appearances without being limited to the above examples.

The coloring component may be present in an amount of 0.1 to 500 parts by weight based on 100 parts by weight of the base resin in the artificial marble. However, this amount is just an illustrative example, and the amount of the coloring component may be adjusted optionally depending on a desired appearance.

Each of the first region and the second region may further include 200 to 500 parts by weight of inorganic fillers based on 100 parts by weight of the base resin forming each region. The inorganic fillers may include any compound used in the art, for example, aluminum hydroxide, magnesium hydroxide, calcium carbonate, silica, alumina, calcium aluminate, and mixtures thereof, without being limited thereto. Particularly, inorganic fillers having a particle size of 3 to 200 µm may be used, but are not limited thereto. In the present invention, the inorganic fillers may be treated with a silane coupling agent, a titanate coupling agent or stearic acid on the surface thereof in order to guarantee dispersibility and mechanical strength while preventing precipitation thereof.

The inorganic filler may be present in an amount of 200 to 500 parts by weight based on 100 parts by weight of the base resin in each region. If the amount of the inorganic filler is less than 200 parts by weight, it is difficult to obtain suitable viscosity in the manufacturing process. If the amount of the inorganic filler exceeds 500 parts by weight, the resin can have an excessively high viscosity, thereby exhibiting low formability.

The artificial marble of the present disclosure may further include 0.2 to 5 parts by weight of a crosslinker based on 100 parts by weight of the base resin of each of the first region and the second region. Here, the crosslinker is not limited to a particular kind but may include any crosslinker which may form a cross-link with the base resin constituting the artificial marble. Examples of the crosslinker may include at least one selected from the group consisting of ethylene glycol di(meth)acrylate, diethylene glycol di(meth)acrylate, triethylene glycol di(meth)acrylate, tetraethylene glycol di(meth)acrylate, trimethylolpropane tri(meth)acrylate, 1,6-hexanediol di(meth)acrylate, polybutylene glycol di(meth)acrylate, neopentyl glycol di(meth)acrylate, and mixtures thereof.

The crosslinker may be present in an amount of 0.2 to 5 parts by weight based on 100 parts by weight of the base resin in each region. If the amount of the crosslinker is less than 0.2 parts by weight, bonding strength of materials can be deteriorated due to formation of uneven parts on the surface of the artificial marble or generation of bubbles in upper or lower parts thereof and heat resistance or discoloration resistance can be reduced. If the amount of the crosslinker exceeds 5 parts by weight, phase change of chips can occur or an aesthetic pattern of the artificial marble can be deteriorated.

Each of the first region and the second region of the artificial marble may further include a crosslinking accelerator.

The crosslinking accelerator is not limited to a particular kind but may include organic peroxides, for example, diacyl peroxides, such as benzoyl peroxide and dicumyl peroxide; hydroperoxides, such as butyl hydroperoxide and cumyl hydroperoxide; t-butyl peroxy maleic acid; t-butyl hydroperoxide; t-butyl hydroperoxybutyrate; acetyl peroxide; lauroyl peroxide; azobisisobutyronitrile; azobisdimethylvaleronitrile; t-butyl peroxyneodecanoate; and t-amyl peroxy-2-ethylhexanoate, which may be used alone or in combinations thereof. The crosslinking accelerator may be used together with a polymerization initiator.

In addition to the above components, a mixture of amine peroxide and sulfonic acid or a mixture of peroxide and a cobalt compound is used such that polymerization and curing may be performed at room temperature. The crosslinking accelerator may be present in an amount of 0.2 to 3 parts by weight based on 100 parts by weight of the base resin, without being limited thereto.

The first or second region of the artificial marble of the present disclosure may further include a radical carrier. Here, the radical carrier is not limited to a particular kind but may include mercaptan compounds, such as n-dodecyl mercaptan, t-dodecyl mercaptan, benzyl mercaptan, trimethylbenzyl mercaptan, and mixtures thereof. The radical carrier may be present in an amount of 0.1 to 5 parts by weight based on 100 parts by weight of the base resin in each region, without being limited thereto.

Furthermore, the artificial marble of the present disclosure may further include at least one kind of additives selected from the group consisting of silicon or non-silicon antifoaming agents; silane including trimethoxysilane, acid coupling agent, or titanate coupling agents; phenyl salicylate, benzophenone, benzotriazole, nickel derivative, or radical scavenger-type UV absorbers; halogen, phosphorus or inorganic metal flame retardants; stearic acid or silicone releasing agents; catechol or hydroquinone polymerization inhibitors; and phenol, amine, quinone, sulfur or phosphorus antioxidants.

The present invention relates to a method of manufacturing artificial marble, which includes preparing uncured resin sheets or blocks using at least two different types of resin compositions providing different aesthetic effects, respectively; kneading the resin sheets or blocks of the at least two different types of resin compositions and forming the kneaded product into an uncured marble resin sheet or resin block; and pressing the marble resin sheet or resin block.

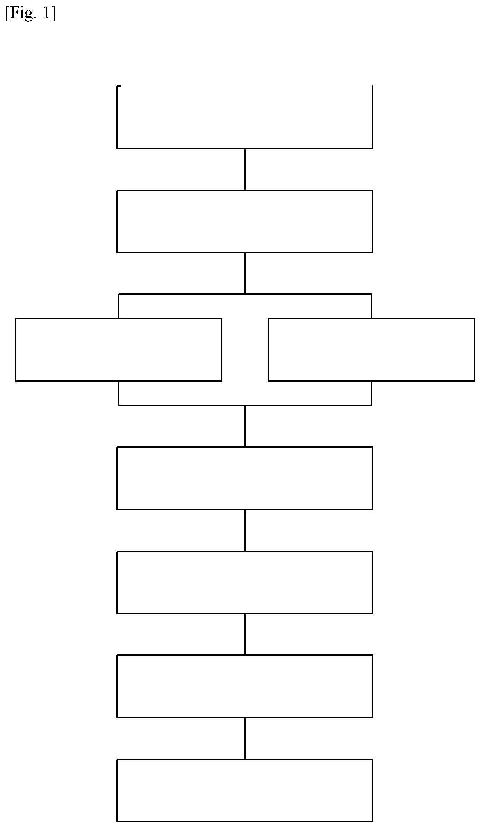

Fig. 1 is a flowchart of a method of manufacturing artificial marble according to an embodiment of the present invention.

First, uncured resin sheets or blocks are prepared using at least two different types of resin compositions prepared to exhibit different aesthetic effects after curing, respectively.

This process may include, for example, (1) preparing a raw material composition by kneading resin syrup and inorganic fillers; and (2) forming the raw material composition into an uncured resin sheet or block by calendering, extruding, pressing, or casting.

In preparation (1) of the raw material composition, the resin syrup is not particularly limited but may include any resin syrup generally used in the field of artificial marble. The resin syrup generally corresponds to the base resin and may be prepared by dissolving a high-molecular weight compound (e.g., polymer or oligomer) in a monomer. For example, in manufacturing artificial marble using an acrylic resin according to the present invention, a polymer of one of the aforementioned acrylic monomers (e.g., polymethyl methacrylate) is used as the high molecular weight compound and one of the aforementioned acrylic monomers (e.g., methyl methacrylate) is used as the monomer, without being limited thereto.

In preparing the resin syrup, the content of each component is not particularly limited but may be adjusted suitably depending on a desired viscosity. For example, the resin syrup may include about 10 to 50 wt% of a monomer.

In addition to the high molecular weight compound and the monomer, the resin syrup may further include additives, such as a crosslinker and a crosslinking accelerator, as described above, and may suitably contain a coloring component capable of providing aesthetic effects.

In preparation (1) of the raw material composition, the resin syrup (liquid raw material) is kneaded with the inorganic filler, thereby adjusting viscosity. Here, kneading may be carried out using a tool generally used in the art, e.g., a kneader. In this process, the viscosity of the mixture may be adjusted to 5,000 to 100,000 Ps. If the viscosity is less than 5,000 Ps, pressing cannot be suitably performed. If the viscosity is greater than 100,000 Ps, the viscosity of the mixture can increase excessively high, thereby making it difficult to mold the kneaded product into a sheet or block.

In formation (2) of the uncured resin sheet or block, the kneaded product is formed into an uncured resin sheet or block. Here, the sheet or block may be formed by any method, for example, suitably using calendering, extruding, pressing, or casting, without being limited thereto, so long as the high molecular weight compound, the monomer, or the crosslinker included in the kneaded product does not react with each other.

Further, the dimensions of the resin sheets or blocks, e.g., thickness or area, are not particularly limited, but may be suitably adjusted depending on desired purposes.

Then, the uncured resin sheets or blocks are kneaded and formed into an uncured marble resin sheet or resin block.

Kneading the resin sheets or blocks may be carried out by any method, for example, a typical kneader, in consideration of desired aesthetic patterns.

Further, forming the mixture into the uncured marble resin sheet of block may be carried out by any method known in the art, for example, calendering, extruding, pressing, or casting, under conditions that prevent the components included in the sheet or block from causing a curing reaction.

Further, the dimensions of the marble resin sheet or block, e.g., thickness or area, are not particularly limited but may be suitably adjusted depending on desired purposes.

As described above, at least two types of sheets or blocks providing different aesthetic effects are kneaded and formed into an uncured marble resin sheet or resin block, which is then effectively placed in a mold in the pressing process, thereby improving molding efficiency while preventing generation of bubbles therein during molding.

Further, at least two types of uncured resin sheets or blocks providing different aesthetic effects are kneaded and formed into a marble resin sheet or resin block, thereby imparting a natural pattern such as a water-flowing pattern to final artificial marble, which is distinguished from conventional artificial marble of solid-color chips. Further, a plurality of sheets or blocks may be used to form a marble resin sheet or block depending on purposes, thereby producing artificial marble having a substantially similar pattern to that of natural marble.

Next, the marble resin sheet or block is subjected to pressing. Pressing may include, for example, (a) placing the marble resin sheet or block in a mold; and (b) pressing the resin sheet or block at 30 to 150°C and 5 to 50 Kg/cm².

As such, according to the present invention, an uncured sheet or block is placed in a mold and subjected to pressing, thereby producing artificial marble having excellent gloss and mechanical strength without bubbles even after pressing at a low temperature and a low pressure.

The method of the present invention may further include post-processes, for example, cooling the cured product after ejecting from the mold, cutting the cured product into pieces having a desired size, and/or suitably sanding the surface of artificial marble.

### Examples

Next, the present: disclosure will be explained in more detail with reference to the following examples. These examples are provided for illustrative purposes only.

### Example 1

### Preparation of uncured resin sheet

100 parts by weight of acrylic resin syrup containing 30 wt% of polymethyl methacrylate and 70 wt% of methyl methacrylate, 400 parts by weight of aluminum hydroxide, 0.2 parts by weight of t-butyl peroxyneodecanoate, 0.3 parts by weight of t-amyl peroxy-2-ethylhexanoate, 3 parts by weight of ethylene glycol dimethacrylate, 0.2 parts by weight of normal dodecyl mercaptan, 0.2 parts by weight of an antifoaming agent (BYK 555, BYK-Chemie, Germany), 0.75 parts by weight of a coupling agent (BYK 900, BYK-Chemie, Germany), and 0.2 parts by weight of a UV stabilizer (Hisorp-P, LG Chem, Korea) were mixed into a raw material slurry. 0.3 parts by weight of a pigment as a coloring component was added to the slurry, thereby preparing a resin composition.

Then, the resin composition was added to a kneader including 400 parts by weight of aluminum hydroxide and 200 parts by weight of chips through an inlet pipe and kneaded for about 20 minutes to have a viscosity of about 1,000 cps. Then, the kneaded product was removed and molded from a bulk state into a sheet using slab rollers.

Meanwhile, another resin sheet was prepared by the same process as above except that a combination of a pigment and chips providing a different appearance from that of the pigment and the chips used as above was used as a coloring component.

### Preparation of uncured marble resin sheet

The prepared two resin sheets were placed in a kneader and kneaded for about 10 seconds to provide a marble pattern having two mixed patterns. Then, the bulk composition having the marble pattern was removed and formed into an uncured marble resin sheet.

### Preparation of artificial marble

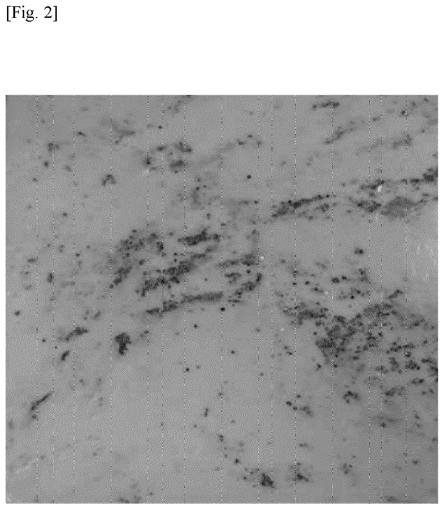

The prepared marble resin sheet was placed in a mold preheated to about 120°C and subjected to pressing at about 15 Kg/cm², followed by removing the mold and cooling and sanding the resin sheet, thereby producing artificial marble. Fig. 2 illustrates the artificial marble prepared in this manner.

### Example 2

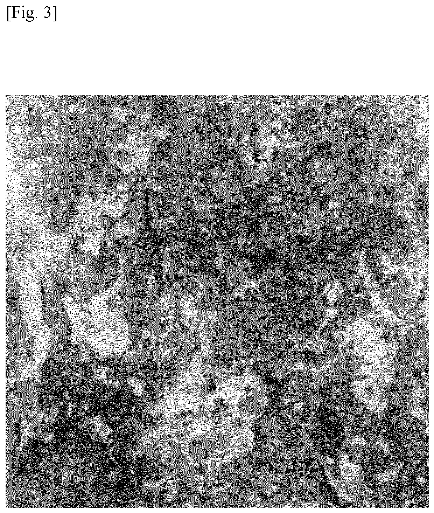

Artificial marble was prepared in the same manner as in Example 1 except that a coloring component was suitably changed to provide a different aesthetic pattern from that of the artificial marble of Example 1. Fig. 3 illustrates the artificial marble prepared in this manner.

## Claims

1. A method of manufacturing artificial marble, comprising:
preparing uncured resin sheets or blocks using at least two different types of resin compositions providing different aesthetic effects, respectively;
kneading the resin sheets or blocks and forming the kneaded product into an uncured marble resin sheet or resin block; and
pressing the marble resin sheet or resin block.

2. The method of claim 1, wherein the preparing uncured resin sheets or blocks comprises (1) preparing a raw material composition by kneading resin syrup and inorganic fillers; and (2) forming the raw material composition into an uncured resin sheet or block using calendering, extruding, pressing, or casting.

3. The method of claim 2, wherein the raw material composition has a viscosity of 5,000 to 100,000 Ps.

4. The method of claim 1, wherein the marble resin sheet or block is formed by calendering, extruding, pressing, or casting.

5. The method of claim 1, wherein the pressing the marble resin sheet or resin block comprises: (a) placing the marble resin sheet or block in a mold; and (b) pressing the resin sheet or block at 30 to 150°C and 5 to 50 Kg/cm².

## Patentansprüche

1. Verfahren zum Anfertigen von künstlichem Marmor, das umfasst:
Herstellen von ungehärteten Harzplatten oder -blöcken unter Verwendung von wenigstens zwei verschiedenen Arten von Harzzusammensetzungen, die jeweils unterschiedliche ästhetische Effekte bereitstellen;
Kneten der Harzplatten oder -blöcke und Ausbilden des gekneteten Produkts in eine ungehärtete Marmorharzplatte oder einen -harzblock; und
Stanzen der Marmorharzplatte oder des -harzblocks.

2. Verfahren nach Anspruch 1, wobei das Herstellen ungehärteter Harzplatten oder - blöcke (1) ein Herstellen einer Rohmaterialzusammensetzung durch Kneten von Harzsirup und anorganischen Füllstoffen; und (2) ein Ausbilden der Rohmaterialzusammensetzung in eine ungehärtete Harzplatte oder einen ungehärteten -block unter Verwendung von Kalandrieren, Extrudieren, Stanzen oder Gießen umfasst.

3. Verfahren nach Anspruch 2, wobei die Rohmaterialzusammensetzung eine Viskosität von 5.000 bis 100.000 Ps aufweist.

4. Verfahren nach Anspruch 1, wobei die Marmorharzplatte oder der -block durch Kalandrieren, Extrudieren, Stanzen oder Gießen ausgebildet wird.

5. Verfahren nach Anspruch 1, wobei das Stanzen der Marmorharzplatte oder des - harzblocks umfasst: (a) Platzieren der Marmorharzplatte oder des -blocks in einer Form; und (b) Stanzen der Harzplatte oder des -blocks bei 30 bis 150 °C und 5 bis 50 kg/cm².

## Revendications

1. Procédé de fabrication de marbre artificiel, comprenant :
la préparation de feuilles ou blocs de résine non durcie à l'aide d'au moins deux types différents de compositions de résine fournissant respectivement des effets esthétiques différents ;
le malaxage des feuilles ou blocs de résine et la mise en forme du produit malaxé en une feuille ou un bloc de résine de marbre non durcie ; et
le pressage de la feuille de résine de marbre ou du bloc de résine.

2. Procédé selon la revendication 1, dans lequel la préparation de feuilles ou de blocs de résine non durcie comprend (1) la préparation d'une composition de matière première par malaxage de sirop de résine et de charges inorganiques ; et (2) la mise en forme de la composition de matière première en une feuille ou un bloc de résine non durcie par calandrage, extrusion, pressage ou coulée.

3. Procédé selon la revendication 2, dans lequel la composition de matière première a une viscosité de 5 000 à 100 000 Ps.

4. Procédé selon la revendication 1, dans lequel la feuille ou le bloc de résine de marbre est formé par calandrage, extrusion, pressage ou coulée.

5. Procédé selon la revendication 1, dans lequel le pressage de la feuille de résine de marbre ou du bloc de résine comprend : (a) le placement de la feuille ou du bloc de résine de marbre dans un moule ; et (b) le pressage de la feuille ou du bloc de résine à 30 à 150 °C et 5 à 50 kg/cm².
